# EUROPÄISCHE PATENTSCHRIFT

(11) **EP 1 601 556 B1**
(45) Veröffentlichungstag und Bekanntmachung des Hinweises auf die Patenterteilung: **23.08.2006**
(21) Anmeldenummer: 04709620.1
(22) Anmeldetag: 10.02.2004
(51) Int. Cl.: B60R 21/13

(54) **ÜBERROLLSCHUTZVORRICHTUNG**
ANTI-ROLLOVER DEVICE
DISPOSITIF DE PROTECTION CONTRE LES TONNEAUX

(30) Priorität: 07.03.2003 DE 20303691 U
(43) Veröffentlichungstag der Anmeldung: 07.12.2005
(73) Patentinhaber: ISE Innomotive Systems Europe GmbH, 51702 Bergneustadt (DE)
(72) Erfinder: RÖHNER, Stephan, 44287 Dortmund (DE); MÜLLER, Hartwig, 09126 Chemnitz (DE)
(74) Vertreter: Grünecker, Kinkeldey, Stockmair & Schwanhäusser Anwaltssozietät
(86) Internationale Anmeldenummer: PCT/EP2004/001231
(87) Internationale Veröffentlichungsnummer: WO 2004/078533

(56) Entgegenhaltungen:
- EP-A- 0 982 197
- DE-C- 10 103 245
- DE-C- 10 151 387

## Beschreibung

Die Erfindung betrifft eine Überrollschutzvorrichtung gemäß Oberbegriff des Anspruchs 1.

Eine gattungsgemäße Überrollschutzvorrichtung (DE 43 42 400 A1) weist ein bis über die unteren Enden des als U-förmiger Rohrbügel ausgebildeten Überrollbügels mit einer Bodenplatte greifendes, Kassettengehäuse aus Aluminium mit Seitenwänden auf, die über einen als Aluminium-Formteil ausgebildeten Führungskörper miteinander verbunden sind. Die Seitenwände sind auch durch eine Rückwand aus Aluminium miteinander verbunden. Der Führungskörper führt die U-Schenkel des Überrollbügels mit Gleitbuchsen aus Kunststoff. Zusätzlich sind die U-Schenkel des Überrollbügels an von der Bodenplatte hochstrebenden Standrohren aus Kunststoff geführt. Das Kassettengehäuse weist somit eine Mischbauweise aus Aluminium und Kunststoff auf. Da die Rückwand die Seitenwände nur im unteren Teil des Kassettengehäuses verbindet, und sich der Führungskörper nur im oberen Teil des Kassettengehäuses zwischen den Seitenwänden erstreckt, dient der Führungskörper als hauptsächliches Tragelement. Die erzielbaren Crash-Performance korreliert mit dem Gewicht der ganzen Baueinheit.

U-förmige, d.h. an einer Breitseite offene, Kassettengehäuse zur Aufnahme U-förmiger Rohr-Überrollbügel sind bekannt, z.B. aus US 5 626 361 (DE 43 14 538 A), EP 1 084 914 A, EP 1 038 735 A, EP 1 028 050 A. Wegen des U-Querschnitts mit einer offenen Seite entstehen relativ kleinflächige Kraftübertragungsbereiche zum Fahrzeugkörper, die im Crash-Fall extrem lokal konzentriert belastet werden.

Aus DE 201 03 001 U sind Überrollbügel aus Faserverbundkunststoff in Schalenbauweise bekannt, die direkt zwischen einer profilierten Fahrzeugkörper-Querwand und einem Querträger aus Faserverbundkunststoff geführt sind.

Ferner ist aus EP 0 982 197 A eine Überrollschutzeinrichtung bekannt, die die Merkmale des Oberbegriffs des unabhängigen Anspruchs 1 zeigt.

Der Erfindung liegt die Aufgabe zugrunde, eine Überrollschutzvorrichtung der eingangs genannten Art anzugeben, die mit kostengünstiger Bauform außerordentlich geringes Gewicht und dennoch eine exzellente Crash-Performance ermöglicht.

Die gestellte Aufgabe wird mit den Merkmalen des Anspruchs 1 gelöst.

Bei dieser Mischbauweise lässt sich das Hohlprofil aus hochbelastbarem Material mit den Kunststoff-Formteilen zur Führung des Überrollbügels aus Faserverbundkunststoff kostengünstig vormontieren. Für die Funktion des Überrollbügels erforderliche Komponenten (Antrieb und Sensorik, Verriegelung und dgl.) lassen sich bequem schon bei der Vormontage in die Überrollschutzvorrichtung eingliedern. Da das stabile Hohlprofil die bei der Kraftübertragung im Crash-Fall mitwirkenden Kunststoff-Formteile und den Überrollbügel allseits umschließt, kann es hohe Kräfte großflächig aufnehmen und großflächig an den Fahrzeugkörper übertragen. Aus dem Aufbau resultiert nicht nur eine hervorragende Crash-Perforrnance, sondern auch geringes Gewicht der kompakten Überrollschutzvorrichtung.

Zweckmäßig besteht das Hohlprofil aus, insbesondere hochfestem, Stahlblech. Materialbedingt und mit dem gegenüber der Länge des Überrollbügels relativ kurzen Hohlprofil wird signifikant Gewicht eingespart und lassen sich hohe Kräfte in den verschiedensten Richtungen problemlos aufnehmen und übertragen.

Alternativ kann das Hohlprofil auch aus Aluminium oder Magnesium bzw, hochfesten Legierungen von Leichtmetallen bestehen.

Eine weitere, im Hinblick auf die Gewichtseinsparung besonders zweckmäßige Alternative ist das aus Faserverbundkunststoff mit Endlosfasern in einer Kunststoffmatrix geformte Hohlprofil.

Aus Herstellungs- und Montagegründen kann es zweckmäßig sein, das Hohlprofil aus passenden Profilen oder Wänden zusammenzusetzen. Als Verbindung bieten sich Verschrauben oder Verschweißen oder anderen Fügetechniken an. Diese Verbindungen können hohe Kräfte klaglos vertragen bzw. unter extrem hohen Kräften Energie aufzehren zumindest etwas nachgeben. Ein einstückiges Hohlprofil aus Stahlblech wird beispielsweise durch Rollieren aus einem Rohr- oder Profilabschnitt geformt.

Die eingegliederten Kunststoff-Formteile haben gegebenenfalls nicht nur die Aufgabe, den Überrollbügel zu führen und die Kräfte in das Hohlprofil einzuleiten, sondern können mit ihrer überstehenden Länge auch außerhalb des Hohlprofils Kräfte aufnehmen und gegebenenfalls sogar ins Fahrzeug einleiten. Deshalb sollten dies mit Kurz- oder Langfasem verstärkte Spritzgussteile sein, die sich kostengünstig herstellen lassen, oder mit Endlosfasern verstärkte Kunststoff-Pressteile, deren Formverfahren außerordentlich hohe Formvielfalt ermöglicht. Hierbei können thermoplastische oder duroplastische Kunststoffe eingesetzt werden. Als Fasermaterial bietet sich z.B. Glas an, wie auch bei dem Faserverbundkunststoff für den Überrollbügel und/oder den Kastenprofilabschnitt, z.B. in marktüblichem Prepregs, die mit Kunststoff imprägniert sind.

Um Kräfte in den Fahrzeugboden übertragen zu können, sollten die freien Enden der Kunststoff-Formteile Fahrzeug-Bodenanschlussmittel aufweisen, entweder derart, dass sie sich in Druckrichtung auf dem Fahrzeugboden abstützen, oder sogar mit diesem formschlüssig bzw. kraftschlüssig verbunden sind.

Zweckmäßig können die freien Enden der Kunststoff-Formteile über einen Querstrebe miteinander verbunden sein odeer werden, die gegebenenfalls Fahrzeugboden-Anschlussmittel aufweist.

Die Querstrebe, die auch der Stabilisierung dient, kann eine zweite Funktion erfüllen, indem sie Komponenten für die Überrollbügel-Betätigung enthält, wie den Aktuator und eine Antriebsfeder bzw. eine Verriegelung für den Überrollbügel in seiner eingefahrenen Stellung. Die Querstrebe kann in einem U-Körper einstückig mit den Formteilen verbunden sein oder separat hergestellt (aus gleichem oder fremdem Material, z.B. Leichtmetall) und eingesetzt werden (verschraubt, verklebt, eingeklinkt, od. dgl.).

Um die im Crash-Fall zu übertragenden Kräfte möglichst großflächig und zuverlässig in das Hohlprofil einleiten zu können, sollte zwischen den Kunststoff-Formteilen und dem Hohlprofil ein Formschluss vorgesehen sein, vorzugsweise über das Hohlprofil durchsetzende Schrauben oder Bolzen mit Kraftverteilhülsen in den Kunststoff-Formteilen und/oder über wenigstens einen am Kunststoff-Formteil angeformten Block, der in einen passend ausgebildeten Durchbruch des Hohlprofils eingreift. Dieser Formschluss erleichtert auch die Vormontage der Überrollschutzvorrichtung.

In zumindest einem Kunststoff-Formteil kann ein Klinkenlagerbolzen gehalten sein, der eine den ausgefahrenen Überrollbügel abstützende Klinke trägt und deren Kraft überträgt. Der Klinkenlagerbolzen sollte, vorzugsweise, auch das Hohlprofil durchsetzen.

Um im Crashfall zwischen dem Überrollbügel und dem Fahrzeug Energie aufzuzehren, könnte im Kunststoff-Formteil und/oder im Hohlprofil ein Solldeformationsbereich vorgesehen sein, den der Klinkenlagerbolzen bei der Kraftübertragung zur Energieaufzehrung deformieren. Dies sind beispielsweise bewusst eingeformte Materialschwächungen im Kunststoff-Formteil und/oder verformbare oder brechbare Durchgangsöffnungen im Hohlprofil, die eine vorbestimmte Wanderbewegung des Klinkenlagerbolzens unter Last zulassen.

Damit der Überrollbügel im Crash-Fall möglichst früh in Kontakt mit dem Untergrund kommt, und auch mit günstigen Hebelarmen bezüglich der Einspannstelle des Hohlprofils im Fahrzeugkörper, könnte der Überrollbügel eine allseits verdickte Kopfstruktur, gegebenenfalls mit verbreiterten Schultern im oberen Endbereich besitzen. Dadurch wird ein zu leichtes Eindringen des Überrollbügels in weichen Untergrund vermieden und kann z.B. ein gewünschtes Abriebverhalten vorgegeben werden.

Wenigstens ein Anker im Überrollbügel kann die ausgefahrene Endposition definieren und an beiden Seiten um Ränder des Hohlprofils herumgreifen, um ein ungewünschtes Aufweiten des Hohlprofils unter den Reaktionskräften zu verhindern.

Weiterhin könnte im Überrollbügel wenigstens ein lokaler Energie-Absorptionsbereich zur gezielten Energievemichtung vorgesehen werden.

Eine weitere Energieaufzehrung lässt sich mit wenigstens einer Abdeckung auf dem Hohlprofil erzielen, die sich bei der unvermeidbaren Setzbewegung des Überrollbügels mit einer vorzugsweise schneckenartigen Kante in den Randbereich eingräbt und Material abträgt bzw. sich verformt. Diese Wirkung kann durch eine Kerbe im Randbereich gesichert werden.

Anhand der Zeichnung werden Ausführungsformen erläutert. Es zeigen:
- Fig. 1: eine Perspektivansicht einer vormontierten Überroll-Schutzvorrichtung, mit ausgefahrenem Überrollbügel,
- Fig. 2: eine Perspektivansicht ohne Überrollbügel, und
- Fig. 3: eine perspektivische Endansicht ohne Überrollbügel-Führungen.

Eine Überrollschutzvorrichtung P, die als Baueinheit E in einen nicht gezeigten Fahrzeugkörper installierbar ist, und zwar entweder in einen Schacht zwischen Fahrzeugkörper-Querwänden oder direkt an eine Fahrzeugkörper-Querwand oder einen Querträger, dient zum Insassenschutz im Falle eines Überschlags des Fahrzeugs, und wird deshalb, hauptsächlich, für Cabriolets verwendet. Die Überrollschutzvorrichtung P wird hinter eine Sitzlehne (nicht gezeigt) eingebaut, und zwar entweder hinter jedem Vordersitz oder jedem Rücksitz.

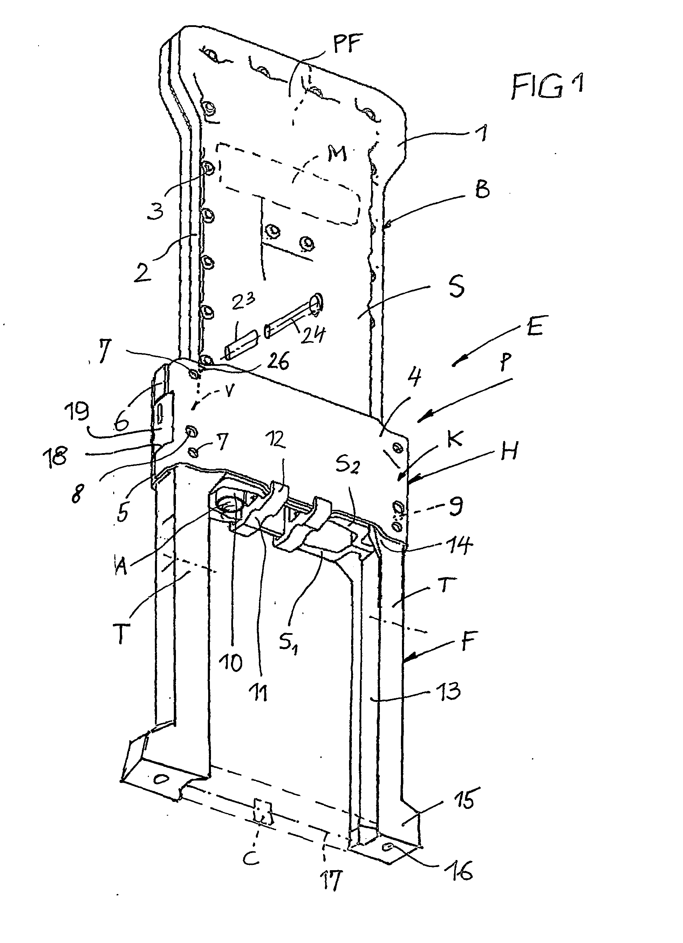

Die Hauptkomponenten der Überrollschutzvorrichtung P sind ein Kassettengehäuse H, in dem ein Überrollbügel B aus einer nicht gezeigten, eingefahrenen Position in die in Fig. 1 gezeigte ausgefahrene Überroll-Position verschiebbar geführt ist, und Führungen F für den Überrollbügel B. Zum Festlegen des Überrollbügels B in der Überroll-Position ist eine in das Kassettengehäuse H integrierte Verriegelung V vorgesehen. Im Überrollbügel B montierte Anker 11 dienen zur Anschlagbegrenzung in der Überroll-Position. Ferner ist ein Ausfahrantrieb A vorgesehen, beispielsweise wenigstens eine vorgespannte Druckfeder, die durch einen Aktuator C aktivierbar ist, sobald eine nicht gezeigte, ebenfalls integrierte Sensorik eine ebenfalls nicht gezeigte, die eingefahrene Position festlegende Verriegelung löst.

Der Überrollbügel B ist in Schalenbauweise aus Faserverbundkunststoff ausgebildet, und zwar ein- oder mehrschalig - z.B. wie gezeigt - doppelschalig, d.h. mit einem Schalenkörper S aus hier zwei aneinander mit Befestigungselementen 3 festgelegten Schalen S1, S2. Der Überrollbügel B besitzt im Wesentlichen lineare Randbereiche 2, an denen die Führungen F angreifen. Der Überrollbügel B kann eine verdickte Kopfstruktur PF aufweisen, und/oder über die Randbereiche hineinragende Schultern 1, um das Abriebverhalten und/oder Eingrabeverhalten im Crashfall zu beeinflussen.

Das Kassettengehäuse H besteht aus einem den Überrollbügel B und die Führungen F allseits umfassenden, beidendig offenen Hohlprofil K aus einem z.B. hochfesten Material. Gezeigt ist beispielsweise ein Hohlprofil K aus hochfestem Stahlblech, z.B. hergestellt aus zwei Profilen 4, 5, die im Bereich ihrer Randflansche 6 miteinander verbunden sind, z.B. Schweißen, Verschrauben, Clinchen, Vemieten, oder dgl. Das Hohlprofil könnte auch einstückig und z.B. durch Rollieren geformt sein.

Alternativ kann das Hohlprofil K aus Aluminium oder Magnesium, oder hochfesten Legierungen dieser Leichtmetalle bestehen, oder aus Faserverbundkunststoff einer ähnlichen oder anderen Art wie der Überrollbügel B. Die Höhe des Hohlprofils K ist bei der gezeigten Ausführungsform geringer als seine Breitenerstreckung. Die Führungen F sind in den Schmalseitenbereichen des Hohlprofils K zumindest formschlüssig festgelegt.

Jede Führung F ist ein Kunststoff-Formteil T mit langgestreckter Form, einer innenliegenden Führungsbahn 13 für einen Randbereich 2, verstärkten, oberen Befestigungsbereichen 14, und gegebenenfalls verstärkten unteren Befestigungsbereichen 15 mit Fahrzeugkörper-Boden-Anschlussmitteln 16. Gegebenenfalls sind die freien Enden der Formteile T durch wenigstens eine Querstrebe 17 miteinander verbunden, an der beispielsweise der Aktuator C angeordnet sein kann, und/oder die Fahrzeugkörper-Boden-Anschlussmittel 16. Die Führungen 7 könnten kürzer als gezeigt sein (strichpunktiert angedeutet), falls zur Kraftübertragung nur das Hohlprofil K verwendet wird. Die beiden Formteile T könnten in einer U-Struktur einstückig mit der Querstrebe 17 sein. Alternativ kann die Querstrebe 17 ein eigener Formteil, z.B. aus Leichtmetall oder Kunststoff, sein, in den die Aufnahmen für z.B. den Aktuator oder die Ausschie- " befeder eingeformt sind, und der sich, z.B. einfach in Öffnungen der Formteile einklinken lässt.

Die Formteile T können Spritzgussteile aus kurz- oder langfaserverstärktem Kunststoff sein, oder Pressformteile aus Faserverbundkunststoff.

Zur formschlüssigen Festlegung jedes Formteils T im Hohlprofil K dienen beispielsweise durch das Hohlprofil K durchgehende Befestigungsschrauben oder Bolzen 24, z.B. mit Kraftverteil- und Distanzhülsen 23 in Befestigungsbohrungen 7 und/oder jeweils ein angeformter Block 19, der in eine im Hohlprofil K geformte Aussparung 18 eingepasst ist.

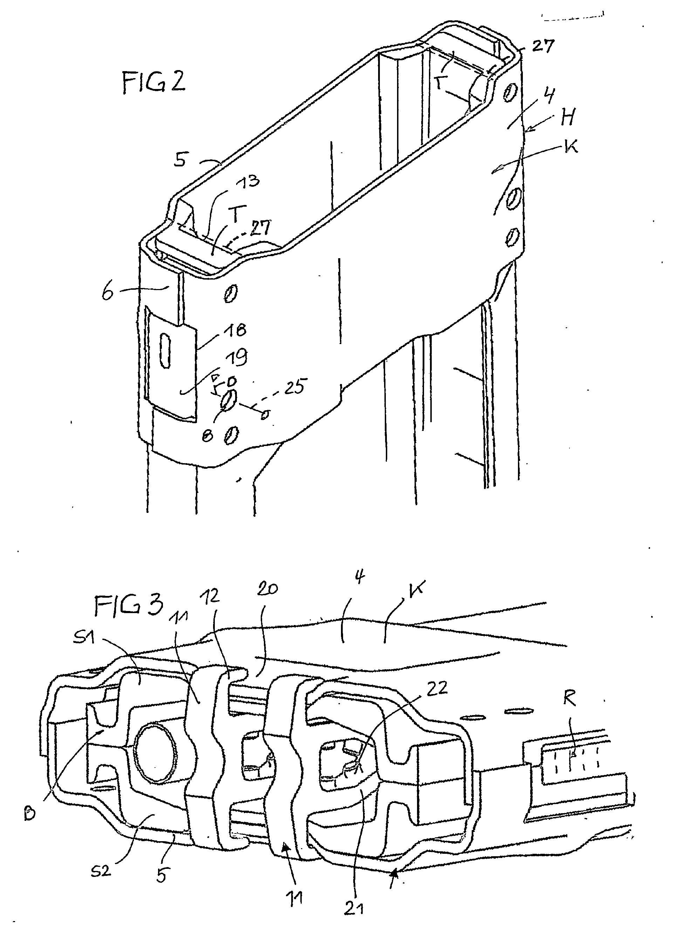

Die Verriegelungsvorrichtung V kann, vorzugsweise an einer Überrollbügel-Seite, eine in Fig. 2 angedeutete Klinke D auf einem Klinkenlagerbolzen 25 aufweisen, die mit einer in Fig. 3 angedeuteten Rastverzahnung R (z.B. aus Leichtmetall) im Randbereich 2 zusammenwirkt. Der Klinkenlagerbolzen 25 kann Lageröffnungen 8 im Hohlprofil K durchsetzen. Zweckmäßig sind im Formteil T und/oder im Hohlprofil K Soll-Deformationsbereiche 9 vorgesehen, die unter Last auf dem ausgefahrenen Überrollbügel B in vorbestimmter Weise nachgeben, um Energie aufzuzehren. Dies können geschwächte Bereiche im Formteil T und/oder geschwächte Bereiche im Hohlprofil K sein, beispielsweise schlüssellochartig gestaltete Lageröffnungen 8, wie bei 9 gestrichelt angedeutet.

Die den Ausfahrantrieb A darstellende Feder kann in einem im Inneren des Überrollbügels B vorgesehenen Rohr 10 geführt sein und sich am Fahrzeugkörper-Boden und/oder an der Querstrebe 17 abstützen.

Die ausgefahrene Überroll-Position begrenzenden Anker 11 bestehen beispielsweise aus Aluminium, sind in das offene Ende des Überrollbügels B eingesteckt und (Fig. 3) bei 22 mit dem Überrollbügel verbinden. Jeder Anker (es könnte auch nur ein einziger vorgesehen sein) besitzt einen keilförmigen Einstecldeil 21 passend zum Innenquerschnitt des Überrollbügels und zwei nach außen greifende Haken 12, die am unteren Randbereich des Kastenprofilabschnitts K abfangbar sind, beispielsweise in einer dort eingeformten Mulde 20 an jeder Seite, und die die Randbereiche hintergreifen, um das Aufweiten des Hohlprofils K unter den entstehenden Reaktionskräften zu vermeiden.

Der Faserverbundkunststoff, aus dem der Überrollbügel B und/oder das Hohlprofil K und/oder die Formteile T bestehen können, enthält vorzugsweise Endlosfasern aus Glas in einer Kunststoffmatrix eines z.B. thermoplastischen Kunststoffes und sind nach einem Heißpressverfahren in die gewünschte Form verarbeitet. Die Endlosfasern sind zweckmäßig in handelsüblichen Prepregs schon mit der Kunststoffimprägnierung verarbeitet, beispielsweise in Form von Geweben oder Gelegen. Andere hochfeste Fasern, z.B. aus Kohlenstoff, könnten gegebenenfalls ebenfalls benutzt werden.

In der Überrollschutzvorrichtung P stehen die Kunststoff-Formteile T in festem Verbund mit dem stabilen Hohlprofil K, um bei einem Überschlag die hohen Kräfte vom Überrollbügel B in das Hohlprofil K einzuleiten, das Kräfte an den Fahrzeugkörper weitergibt. Die Kunststoff-Formteile T können aufgrund ihrer Ausbildung und gegebenenfalls Abstützung am Fahrzeugkörper, insbesondere am Fahrzeugkörper-Boden, auch Kräfte übertragen, d.h. nach Art von Biegeträgem und/oder Druckstützen bei der Lastabtragung mitwirken.

Das Hohlprofil K kann aus Profilen ausgebildet sein, oder aus einem U-Profil und einer im Wesentlichen ebenen Abdeckplatte, oder gegebenenfalls sogar einstückig.

Das Hohlprofil K kann bei einer einfachen Ausführungsform einen rechteckigen Kasten definieren. Bei der gezeigten Ausführungsform sind die Schmalseitenbereiche gegenüber dem Mittelabschnitt des Hohlprofils über die gesamte Höhe und in den Bereichen, in denen die Kunststoff-Formteile T formschlüssig festgelegt sind, eingezogen, so dass im Mittelbereich die lichte Weite größer ist als in den Schmalseitenbereichen.

Die die vorfertigbare und vorprüfbare Baueinheit E konstituierende Überrollschutzvorrichtung P baut kompakt, ist sehr leicht und zeigt hervorragende Überroll-Crash- " Performance, bei der alle im Crash-Fall auftretenden Belastungen in den verschiedensten Richtungen zuverlässig in den Fahrzeugkörper eingeleitet werden. Die verbreiterten Schultern 1 bzw. die Kopfstruktur PF des Überrollbügels B finden frühzeitig Bodenkontakt. Außerdem verhindert die Verbreiterung im oberen Endbereich des Überrollbügels (die Kopfstruktur PF) ein zu leichtes Eingraben des Überrollbügels in nachgiebigen Untergrund, und ist dort gegebenenfalls eine Verschleißzone mit erhöhter Massenkonzentration und/oder Verschleißeinlagen gebildet, was insgesamt ebenfalls zur guten Crash-Performance beiträgt.

Da jeglicher Energieverzehr bei einem Überschlag bereits zwischen dem Überrollbügel B und dem Fahrzeugkörper einen positiven Beitrag zur Crash-Performance leistet, können weitere Maßnahmen zweckmäßig sein.

In den Fig. 1, 2 ist in einem Randbereich 2 des Überrollbügels B eine Kerbe 26 gestrichelt angedeutet, die in der ausgefahrenen Position in etwa bei einer scharfen Kante einer am Hohlprofil K seitlich angebrachten Abdeckung 27 liegt. Unter einer Last neigt sich nämlich der Überrollbügel B relativ zum Hohlprofil K zur Seite, insbesondere wenn sich nur ein Klinkenlager an einer Seite befindet, wobei sich dann die Abdeckung 27 in den Randbereich 2 eingräbt und bei der unvermeidbaren Setzbewegung des Überrollbügels B Material abschält und so Energie aufzehrt. Die Kerbe 26 könnte für diesen Ablauf sogar weggelassen werden, falls die Abdeckung 27 stabil und/oder scharfkantig genug ist.

Eine weitere Maßnahme ist wenigstens ein durch den hohen Feiheitsgrad bei der Formung des Überrollbügels aus Faserverbund-Kunststoff in diesen lokal eingeformten Energie-Absorptionsbereich M oder im Crashfall besonders energieaufzehrend anspricht.

Diese Maßnahme kann durch eine spezielle Konstruktion und/oder Wandstärkenvariation und/oder Fasergehaltsvariation und dgl. in den Überrollbügel B eingegliedert sein.

## Patentansprüche

1. Überrollschutzvorrichtung (S), mit einem einen ausfahrbar geführten Überrollbügel (B) enthaltenden Kassettengehäuse (H), das Führungen (F) für den Überrollbügel (B) aufweist, **dadurch gekennzeichnet, dass** der Überrollbügel (B) ein ein- oder mehrschaliger Formteil (S) aus Faserverbundkunststoff ist und zumindest teilweise parallel zur Ausfahrrichtung verlaufende Schalenrandbereiche (2) aufweist, dass das Kassettengehäuse (H) als um den Überrollbügel (B) und die Führungen (F) geschlossenes, beidendig offenes Hohlprofil (K) aus hochfestem Werkstoff ausgebildet ist, aus dem der eingefahrene Überrollbügel (B) oben und unten vorsteht, und dass die Führungen (F) an den Schalenrandbereichen (2) angreifende Kunststoff-Formteile (T) sind, die innen in den Schmalseiten des Hohlprofils (K) festgelegt sind und zumindest nach unten aus dem Hohlprofil (K) vorstehen.

2. Überrollschutzvorrichtung nach Anspruch 1, **gekennzeichnet durch** ein Hohlprofil (K) aus, vorzugsweise hochfestem, Stahlblech.

3. Überrollschutzvorrichtung nach Anspruch 1, **gekennzeichnet durch** ein Hohlprofil (K) aus Aluminium oder Magnesium.

4. Überrollschutzvorrichtung nach Anspruch 1, **gekennzeichnet durch** ein Hohlprofil (K) aus Faserverbundkunststoff, insbesondere mit Endlosfasern in einer Kunststoffmatrix.

5. Überrollschutzvorrichtung nach Anspruch 1, **dadurch gekennzeichnet, dass** das Hohlprofil (K) einstückig oder aus Profilen (4, 5) und/oder Wandteilen zusammengesetzt ist.

6. Überrollschutzvorrichtung nach Anspruch 1, **dadurch gekennzeichnet, dass** die Kunststoff-Formteile (T), vorzugsweise mit Kurz- oder Langfasem verstärkte, Kunststoff-Spritzgussteile oder mit Endlosfasern verstärkte Kunststoffpressteile aus Faserverbundkunststoff sind.

7. Überrollschutzvorrichtung nach Anspruch 1, **dadurch gekennzeichnet, dass** die Kunststoff-Formteile (T) an ihren aus dem Hohlprofil (K) vorstehenden freien Enden Fahrzeug-Boden-Anschlussmittel (15, 16) aufweisen.

8. Überrollschutzvorrichtung nach Anspruch 1, **dadurch gekennzeichnet, dass** die aus dem Hohlprofil (K) vorstehenden, freien Enden der Kunststoff-Formteile (T) durch wenigstens eine Querstrebe (17) verbunden sind, die, vorzugsweise, Fahrzeug-Boden-Anschlussmittel aufweist.

9. Überrollschutzvorrichtung nach Anspruch 8, **dadurch gekennzeichnet, dass** die Querstrebe (17) mit den Kunststoff-Formteilen (T) entweder einstückig oder aus gleichem oder fremdem Material ausgebildet und form- und/oder kraftschlüssig zwischen die Formteile (T) eingesetzt ist.

10. Überrollschutzvorrichtung nach Anspruch 8, **dadurch gekennzeichnet, dass** die Querstrebe (17) Träger von Ausstattungskomponenten der Überrollschutzvorrichtung wie einen Aktuator (C) und/oder einer Ausschiebefeder (A) für den Überrollbügel (B) ist.

11. Überrollschutzvorrichtung nach Anspruch 1, **dadurch gekennzeichnet, dass** die Kunststoff-Formteile (T) formschlüssig mit dem Hohlprofil (K) verblockt sind, vorzugsweise über den Kastenprofilabschnitt (K) durchsetzende Schrauben oder Bolzen (24), gegebenenfalls mit Kraftverteilhülsen (23), und/oder über wenigstens einen, an jedem Kunststoff-Formteil (T) angeformten, in einen Durchbruch (18) des Hohlprofils (K) eingreifenden Block (19).

12. Überrollschutzvorrichtung nach Anspruch 1, **dadurch gekennzeichnet, dass** zumindest ein Kunststoff-Formteil (T)einen Klinkenlagerbolzen (25) für eine mit einer Rastverzahnung (R) im Schalenseitenrandbereich (2) zusammenwirkende Sperrklinke (6) aufweist, vorzugsweise einen auch im Hohlprofil (K) gelagerten Klinkenlagerbolzen (25).

13. Überrollschutzvorrichtung nach Anspruch 12, **dadurch gekennzeichnet, dass** im Kunststoff-Formteil (T) und/oder im Hohlprofil (K) ein Solldeformationsbereich (9) für den Klinkenlagerbolzen (25) vorgesehen ist.

14. Überrollschutzvorrichtung nach Anspruch 1, **dadurch gekennzeichnet, dass** der Überrollbügel (B) an seinem über das Hohlprofil (K) nach oben vorstehenden Ende eine verdickte Kopfstruktur (PF) gegebenenfalls mit gegenüber den parallel zur Ausfahrrichtung verlaufenden Schalenseitenrandbereichen (2) nach außen verbreiterten Schultern (1), aufweist.

15. Überrollschutzvorrichtung nach wenigstens einem der vorhergehenden Ansprüche, **dadurch gekennzeichnet, dass** im unteren Ende des Überrollbügel-Formteils (S) wenigstens ein Anker (11) festgelegt ist, der am Hohlprofil (K) abfangbare Anschläge (12) besitzt, und dass die Anschläge (12) in abgefangener Position Ränder des Hohlprofils (K) als Aufweit-Widerlager hintergreifen.

16. Überrollschutzvorrichtung nach Anspruch 1, **dadurch gekennzeichnet, dass** im Überrollbügel (B) zwischen dem oberen Ende und dem Abstützbereich im Hohlprofil (K) wenigstens ein lokaler Energie-Absorptionsbereich (M) mit gegenüber der Umgebung nachgebendem Absorptionsverhalten vorgesehen ist.

17. Überrollschutzvorrichtung nach Anspruch 1, **dadurch gekennzeichnet, dass** das am Hohlprofil (K) wenigstens eine oberseitige Abdeckung (27) angebracht und nur einer Kante auf den Schalenrand (2) des Überrollbügels (B) ausgerichtet ist, und dass, vorzugsweise, im Schalenrand (2) eine Kerbe (26) zum Eingriff der Kante geformt ist.

## Claims

1. Rollover protection device (S) comprising a cassette housing for guiding a deployable rollover bar (B), the cassette housing (H) including guidances (F) for the rollover bar (B), **characterised in that** the rollover bar (B) is a form part (S) made of fibre reinforced compound plastic material in a structure consisting of a single shell or of several shells, that the rollover bar (B) includes shell edge regions (2) which at least partially extend parallel to the direction of the deployment of the rollover bar (B), that the cassette housing (H) is a hollow profile (K) made from high strength material, is open at both ends and is closed around the rollover bar (B) and the guidances (F), that the rollover bar (B) when retracted into the hollow profile (K) protrudes from the hollow profile (K) at the upper and lower profile ends, that the guidances (F) are plastic form parts (T) which engage at the shell edge regions (2) and are firmly attached inside in the narrow sides of the hollow profile (K), and that the guidances (F) protrude at least downwards beyond the lower end of the hollow profile (K).

2. Rollover protection device as in claim 1, **characterised by** a hollow profile (K) made from steel sheet material, preferably high strength steel sheet material.

3. Rollover protection device as in claim 1, **characterised by** a hollow profile (K) made from aluminium or magnesium.

4. Rollover protection device as in claim 1, **characterised by** a hollow profile (K) made from fibre reinforced compound plastic material, particularly containing endless fibres in a matrix of plastic material.

5. Rollover protection device as in claim 1, **characterised in that** the hollow profile (K) is a one-piece structure or is combined of profiles (4, 5) and/or wall parts, respectively.

6. Rollover protection device as in claim 1, **characterised in that** the plastic form parts (T) are plastic injection moulded parts which, preferably, are reinforced with short staple fibres or long fibres, or are plastic pressing parts made from fibre reinforced compound plastic material which is reinforced with endless fibres, respectively.

7. Rollover protection device as in claim 1, **characterised in that** the plastic form parts (T) are provided with vehicle body bottom connection means (15, 16) at the free ends which free ends protrude from the hollow profile (K).

8. Rollover protection device as in claim 1, **characterised in that** the free ends of the plastic form parts (T) which free ends protrude from the hollow profile (K) are interconnected by at least one lateral strut (17), and that the lateral strut (17), preferably, is provided with vehicle body bottom connection means.

9. Rollover protection device as in claim 8, **characterised in that** the lateral strut (17) either is unitarily formed with the plastic form parts (T) or is made from the same or from a foreign material and is inserted between the plastic form parts (T) with a form fit and/or a force fit.

10. Rollover protection device as in claim 8, **characterised in that** the lateral strut (17) is designed as a carrier of equipment components of the rollover protection device (T) like an actuator (C) and/or a deploying spring (A) for the rollover bar (B).

11. Rollover protection device as in claim 1, **characterised in that** the plastic form parts (T) are locked to the hollow profile (K) by a form fit, preferably by screws or bolts (24) penetrating through the hollow profile (K), the screws or bolts (24), in some cases, carrying force distributing sleeves (23), or by means of at least one block (19) which is formed at the plastic form part (T) and engages into a cut-out (18) of the hollow profile (K).

12. Rollover protection device as in claim 1, **characterised in that** at least one plastic form part (T) is provided with a pawl supporting bolt (25) for a locking pawl (6) coacting with a latching cogging (R) in the shell side edge region (2), and that, preferably, the pawl supporting bolt (25) additionally is supported in the hollow profile (K).

13. Rollover protection device as in claim 12, **characterised in that** a predetermined deformation area (9) is provided for the pawl supporting bolt (25) in the plastic form part (T) and/or in the hollow profile (K).

14. Rollover protection device as in claim 1, **characterised in that** the rollover bar (B) has a thickened head structure (PF) at the upper end protruding beyond the hollow profile (K), in some cases with outwardly broadened shoulders (1) which protrude outwards relative to the shell side edge regions (2) which extend parallel to the direction of the extension of the rollover bar (B).

15. Rollover protection device as in at least one of the preceding claims, **characterised in that** at least one anchor (11) is attached in the lower end of the form part (S) of the rollover bar (B), that the anchor has hook stops (12) which can be brought into engagement with the hollow profile (K), and that the hook stops (12) grip behind edges of the hollow profile (K) when the rollover bar (B) has been caught by the anchor, the hook stops (12) serving as expansion prevention means against a reaction force expansion of the hollow profile (K).

16. Rollover protection device as in claim 1, **characterised in that** at least one local energy absorption area (M) is provided in the rollover bar (B) between the upper end and the suspension region in the hollow profile (K), the local energy absorption area (M) being formed with an absorption property allowing a yielding in relation to the surrounding of the local energy absorption area (M).

17. Rollover protection device as in claim 1, **characterised in that** at least one upper cover (27) is provided at the hollow profile (K), that one edge of the cover (27) is directed to the shell edge region (2) of the rollover bar (B), and that, preferably, a nick (26) is formed in the shell edge region (2) for the engagement of the edge of the cover (27).

## Revendications

1. Dispositif de protection en cas de retournement (S), comportant un boîtier de type cassette (H), qui contient un arceau de sécurité (B) extractible et qui comporte des glissières (F) pour l'arceau de sécurité (B), **caractérisé en ce que** l'arceau de sécurité (B) est une pièce moulée (S) avec une ou plusieurs coques en matière plastique composite renforcée par des fibres et comporte des bords de coque (2) au moins en partie parallèles au sens d'extraction, **en ce que** le boîtier de type cassette (H) est réalisé en matériau très résistant sous forme de profilé creux (K), fermé autour de l'arceau de sécurité (B) et des glissières (F) et ouvert aux deux extrémités, hors duquel l'arceau de sécurité (B) non déployé dépasse vers le haut et le bas, et **en ce que** les glissières (F) sont des pièces plastiques moulées (T), qui sont en prise avec les bords de coque (2) et qui sont fixées à l'intérieur du profilé creux (K) dans les petits côtés de celui-ci et s'avancent en saillie au moins vers le bas hors du profilé creux (K).

2. Dispositif de protection en cas de retournement selon la revendication 1, **caractérisé par** un profilé creux (K) réalisé de préférence en tôle d'acier très résistante.

3. Dispositif de protection en cas de retournement selon la revendication 1, **caractérisé par** un profilé creux (K) réalisé en aluminium ou magnésium.

4. Dispositif de protection en cas de retournement selon la revendication 1, **caractérisé par** un profilé creux (K) réalisé en matière plastique composite renforcée par des fibres, en particulier avec des fibres continues dans une matrice en matière plastique.

5. Dispositif de protection en cas de retournement selon la revendication 1, **caractérisé en ce que** le profilé creux (K) est réalisé d'un seul tenant ou est formé par un assemblage de profilés (4, 5) et/ou d'éléments de paroi.

6. Dispositif de protection en cas de retournement selon la revendication 1, **caractérisé en ce que** les pièces plastiques moulées (T) sont de préférence des pièces en matière plastique composite à fibres, à savoir des pièces moulées par injection de matière plastique renforcée par des fibres courtes ou des fibres longues ou des pièces pressées en matière plastique renforcée par des fibres continues.

7. Dispositif de protection en cas de retournement selon la revendication 1, **caractérisé en ce que** les pièces plastiques moulées (T) comportent, sur leurs extrémités libres en saillie hors du profilé creux (K), des moyens d'assemblage (15, 16) avec le fond du véhicule.

8. Dispositif de protection en cas de retournement selon la revendication 1, **caractérisé en ce que** les extrémités libres, en saillie hors du profilé creux (K), des pièces plastiques moulées (T) sont reliées entre elles par au moins une traverse (17) qui comporte de préférence des moyens d'assemblage avec le fond du véhicule.

9. Dispositif de protection en cas de retournement selon la revendication 8, **caractérisé en ce que** la traverse (17) est réalisée d'un seul tenant avec les pièces plastiques moulées (T) ou est réalisée dans le même matériau ou un matériau différent et montée par conjugaison de forme ou par adhérence entre les pièces plastiques moulées (T).

10. Dispositif de protection en cas de retournement selon la revendication 8, **caractérisé en ce que** la traverse (17) est un support pour des composants d'équipement du dispositif de protection en cas de retournement, tels qu'un actuateur (C) et/ou un ressort de déploiement (A) pour l'arceau de sécurité (B).

11. Dispositif de protection en cas de retournement selon la revendication 1, **caractérisé en ce que** les pièces plastiques moulées (T) sont bloquées par conjugaison de forme avec le profilé creux (K), de préférence au moyen de vis ou boulons (24), qui passent à travers la partie profilée en cassette (K), le cas échéant avec des douilles de répartition de charge (23), ou au moyen d'un bloc (19) formé sur chaque pièce plastique moulée (T) et s'engageant dans un passage (18) du profilé creux (K).

12. Dispositif de protection en cas de retournement selon la revendication 1, **caractérisé en ce qu'**au moins une pièce plastique moulée (T) comporte un boulon d'appui (25) pour un cliquet d'arrêt (6) coopérant avec une denture d'arrêt (R) dans le bord de coque (2), de préférence un boulon d'appui de cliquet (25) logé également dans le profilé creux (K).

13. Dispositif de protection en cas de retournement selon la revendication 12, **caractérisé en ce que**, dans la pièce plastique moulée (T) et/ou dans le profilé creux (K), il est prévu une zone destinée à déformation (9) pour le boulon d'appui de cliquet (25).

14. Dispositif de protection en cas de retournement selon la revendication 1, **caractérisé en ce que** l'arceau de sécurité (B), sur son extrémité en saillie vers le haut sur le profilé creux (K), comporte une structure de tête (PF) épaissie, le cas échéant avec des épaulements (1) s'élargissant vers l'extérieur par rapport aux bords de coque (2) parallèles au sens d'extraction.

15. Dispositif de protection en cas de retournement selon au moins l'une des revendications précédentes, **caractérisé en ce que** dans l'extrémité inférieure de la pièce moulée (S) formant l'arceau de sécurité est fixée au moins une ancre (11) qui comporte des butées (12) propres à être retenues sur le profilé creux (K), et **en ce que** les butées (12), dans la position de retenue, s'engagent sous forme de contre-butée élargie derrière les bords du profilé creux (K).

16. Dispositif de protection en cas de retournement selon la revendication 1, **caractérisé en ce que** dans l'arceau de sécurité (B), entre l'extrémité supérieure et la zone d'appui dans le profilé creux (K), il est prévu au moins une zone d'absorption d'énergie (M) locale possédant un comportement d'absorption flexible par rapport à l'environnement.

17. Dispositif de protection en cas de retournement selon la revendication 1, **caractérisé en ce qu'**au moins un cache (27) supérieur est posé sur le profilé creux (K) et est orientée avec seulement une arête sur le bord de coque (2) de l'arceau de sécurité (B), et **en ce que**, de préférence, une encoche (26) pour l'engagement de l'arête est formée dans le bord de coque (2).
